(19) Europäisches Patentamt
European Patent Office
Office européen des brevets

(11) Veröffentlichungsnummer: **0 095 114**
**B1**

(12) # EUROPÄISCHE PATENTSCHRIFT

(45) Veröffentlichungstag der Patentschrift: **23.03.88**

(21) Anmeldenummer: **83104777.4**

(22) Anmeldetag: **14.05.83**

(51) Int. Cl.[4]: **C 07 D 493/10** // B41M5/16, B41M5/18 ,(C07D493/10, 311:00, 307:00)

(54) **Fluoranverbindungen, Verfahren zu ihrer Herstellung und ihre Verwendung als Farbbildner in Kopiersystemen.**

(30) Priorität: **18.05.82 DE 3218646**

(43) Veröffentlichungstag der Anmeldung: **30.11.83 Patentblatt 83/48**

(45) Bekanntmachung des Hinweises auf die Patenterteilung: **23.03.88 Patentblatt 88/12**

(84) Benannte Vertragsstaaten: **BE CH DE FR GB LI**

(56) Entgegenhaltungen: **DE-A-2 264 033**

(73) Patentinhaber: **HOECHST AKTIENGESELLSCHAFT**
**Postfach 80 03 20**
**D-6230 Frankfurt am Main 80 (DE)**

(72) Erfinder: **Bingmann, Horst, Dr.**
**Zu den Eichen 13**
**D-6238 Hofheim am Taunus (DE)**

**EP 0 095 114 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Gegenstand der Erfindung sind neue Fluoranverbindungen der allgemeinen Formel (1)

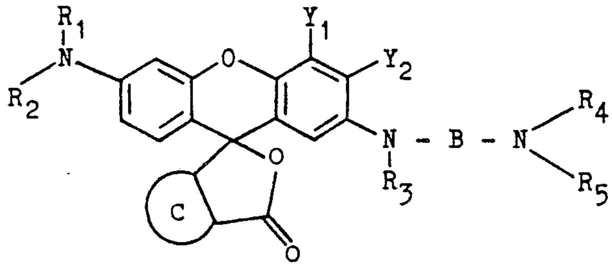

(1)

in welcher $R_1$ und $R_2$ unabhängig voneinander jeweils eine geradkettige oder verzweigte Alkyl-$C_1$—$C_4$-gruppe oder die Benzylgruppe bedeuten, $R_3$ ein Wasserstoffatom oder eine Alkyl-$C_1$—$C_4$-, Benzyl-, Acetyl-, Propionyl- oder Benzoyl-gruppe darstellt, $R_4$ und $R_5$ unabhängig voneinander jeweils eine geradkettige oder verzweigte Alkyl-$C_1$—$C_4$-gruppe, die durch Fluor-, Chlor- oder Bromatome oder durch Hydroxy-, Alkoxy-$C_1$—$C_4$- oder Cyanogruppen substituiert sein können, ferner eine Phenyl- oder Benzylgruppe, die durch Fluor-, Chlor- oder Bromatome oder durch Alkyl-$C_1$—$C_4$-, Alkoxy-$C_1$—$C_4$-, Carb(alkoxy-$C_1$—$C_4$)-, ggfs. durch Alkyl-$C_1$—$C_4$- gruppen substituierte Carbonamidgruppen oder Cyanogruppen substituiert sein können, bedeuten, und $R_4$ und $R_5$ zusammen mit dem Stickstoffatom einen ggfs. durch Alkyl-$C_1$—$C_4$-gruppen substituierten Piperidin, Morpholin- oder Indolrest darstellen können, $Y_1$ und $Y_2$ unabhängig voneinander jeweils ein Wasserstoff-, Chlor- oder Bromatom, eine Alkyl-$C_1$—$C_4$-, Alkoxy-$C_1$—$C_4$- oder Phenylgruppe, B eine ggfs. durch Hydroxy-, Alkyl-$C_1$—$C_4$- oder Alkoxy-$C_1$—$C_4$- gruppen substituierte Alkylen-$C_2$—$C_6$-gruppe darstellt, und C einen ggfs. durch Chlor- oder Bromatome substituierten 1,2-Phenylen- oder 1,2-Naphthylenrest bedeutet, ferner ein Verfahren zu ihrer Herstellung und ihre Verwendung als Farbbildner in einem druck- oder wärmeempfindlichen Aufzeichnungsmaterial.

Die Herstellung der Fluoranverbindungen der genannten Formel (1) kann nach an sich bekannten Verfahren erfolgen. So können die neuen Verbindungen der genannten Formel (1) hergestellt werden, indem man eine Carbonsäure der allgemeinen Formel (3)

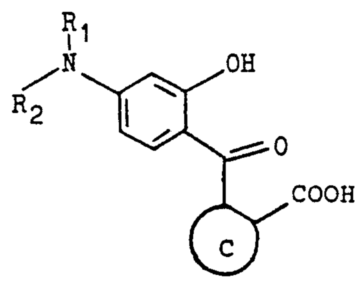

(3)

in welcher $R_1$, $R_2$ und C die weiter oben genannten Bedeutungen haben, mit einer p-Aminophenolverbindung der allgemeinen Formel (4)

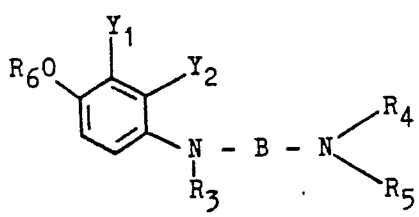

(4)

in welcher $R_6$ ein Wasserstoffatom, eine Alkyl-$C_1$—$C_4$-, Acetyl-, Propionyl- oder Benzoylgruppe, und $R_3$, $R_4$, $R_5$, B, $Y_1$ und $Y_2$ die weiter oben genannten Bedeutungen haben, in Gegenwart eines dehydratisierenden Kondensationsmittels, wie beispielsweise Schwefelsäure oder Phosphorsäure, bei Temperaturen von etwa 10 bis etwa 200°C, vorzugsweise etwa 50 bis etwa 150°C, umsetzt. Die Umsetzung nimmt in Abhängigkeit von der angewandten Reaktionstemperatur und den eingesetzten Reaktionskomponenten etwa 1 bis 20 Stunden in Anspruch.

Die Komponenten der gennanten Formeln (3) und (4) können im Molverhältnis 1:1 eingesetzt werden. Es kann jedoch auch vorteilhaft sein, eine der beiden Komponenten in einem molaren Überschuß bis zu etwa 100 Molprozent anzuwenden.

Nach erfolgter Umsetzung wird das Reaktionsgemisch hydrolysiert, indem man es auf Eiswasser gibt und anschließend durch Zugabe einer Base, wie beispielsweise Natronlauge oder Ammoniak, neutralisiert.

Dann wird der sich abscheidende Feststoff abfiltriert oder mit einem mit Wasser nicht mischbaren inerten, organischen Lösungsmittel, wie beispielsweise Toluol, extrahiert und, ggfs. nach Abziehen des Lösungsmittels, durch Umkristallisieren in einem geeigneten Lösungsmittel gereinigt. Zum Umkristallisieren eignen sich beispielsweise Toluol, Halogenwasserstoffe, Alkohole, aliphatische Kohlenwasserstoffe oder Äther.

Die neuen Verbindungen der genannten Formel (1) können beispielsweise auch hergestellt werden, indem man eine Fluoranverbindung der Formel (5)

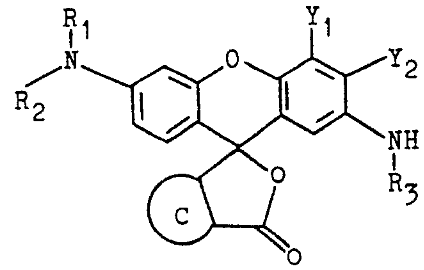

(5)

in welcher $R_1$, $R_2$, $R_3$, $Y_1$, $Y_2$ und C die weiter oben genannten Bedeutungen haben, mit einer Verbindung der allgemeinen Formel (6)

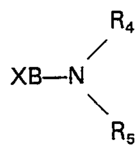

(6)

in welcher X ein Chlor-, Brom- oder Jodatom oder eine Hydroxy-, Acetyl- oder Sulfonyl-Gruppe bedeutet, und $R_4$ und $R_5$ die weiter oben genannten Bedeutungen haben, in einem inerten organischen Lösungsmittel, wie beispielsweise Toluol, Cyclohexan oder Dimethylformamid, bei Temperaturen von etwa 20° bis etwa 200°C, vorzugsweise von etwa 80 bis etwa 150°C, umsetzt.

Die Komponenten der genannten Formeln (5) und (6) können im Molverhältnis 1:1 eingesetzt werden. Es kann jedoch auch vorteilhaft sein, eine der beiden Komponenten in einem molaren Überschuß bis zu etwa 100 Molprozent anzuwenden.

Nach erfolgter Umsetzung wird das Reaktionsgemisch hydrolysiert, indem man es auf Eiswasser gibt. Anschließend wird neutralisiert durch Zugabe einer Base, wie beispielsweise Natronlauge oder Ammoniak. Dann wird der abgeschiedene Feststoff abfiltriert oder mit einem mit Wasser nicht mischbaren Lösungsmittel, wie beispielsweise Toluol, extrahiert und die angefallene Verbindung der Formel (1), ggfs. nach Abziehen des Lösungsmittels, durch Umkristallisieren in einem geeigneten Lösungsmittel gereinigt.

Die zur Durchführung der beiden vorstehend beschriebenen Verfahren benötigten Verbindungen der Formeln (3), (4), (5) und (6) können nach literaturbekannten Verfahren bzw. analog dazu hergestellt werden.

Bei den erfindungsgemäßen neuen Fluoranverbindungen handelt es sich in der Regel um farblose Verbindungen, die als sogenannte Farbbildner in druck- oder wärmeempfindlichen Aufzeichnungsmaterialien sehr gut geeignet sind. Werden sie mit einer sauren, reaktionsfähigen Substanz, d.h. einem Elektronenakzeptor in Kontakt gebracht, so entwickeln sie mit hoher Geschwindigkeit eine blaue, grüne, rote oder schwarze, die bevorzugten Verbindungen der Formel (2) eine graue bis schwarze Farbe. Typische Beispiele für die im allgemeinen in den kohlefreien Kopiersystemen verwendeten sauren Coreaktanten sind beispielsweise Bentonite, Attapulgus-Ton, Siliziumdioxid, Aluminiumoxid, Kaolin oder ein sauer reagierendes polymeres Material, wie beispielsweise ein Phenolformaldehydharz. Die neuen Fluoranverbindungen sind in den für die Herstellung von kohlefreien Kopiersystemen üblicherweise verwendeten, nichtflüchtigen Lösungsmitteln farblos und gut löslich und in Wasser nahezu unlöslich. Sie lassen sich ausgezeichnet in Mischungen mit anderen Farbbildnern anwenden.

Gegenüber den in der DE—OS 2 422 899 und DE—OS 2 253 161 beschriebenen Fluoranverbindungen zeichnen sich die erfindungsgemäßen neuen Fluoranverbindungen durch eine hohe Farbstärke und eine erhöhte Substantivität gegenüber den bei Kopiersystemen üblicherweise eingesetzten Papieren aus.

Die neuen Fluoranverbindungen sind als chromogene Elektronendonatoren (Farbbildner) für eine Vielzahl von kohlefreien druckempfindlichen Vervielfältigungssystemen, wie sie beispielswiese in den US-Patentschriften 2 712 507, 2 730 457, 2 932 582, 3 418 250, 3 418 656, 3 427 180, 3 516 846, 3 672 935 und 3 963 853 sowie in den britischen Patentschriften 1 042 596—1 042 599, 1 053 935 und 1 517 650 beschrieben sind, hervorragend geeignet.

Ferner eignen sie sich auch ausgezeichnet als Farbbildner für thermoreaktive Aufzeichnungsmaterialien, wie sie beispielsweise in der DE—OS 2 110 854, DE—OS 2 228 581, der französischen Patentschrift 1 524 826 und den schweizerischen Patentschriften 407 185, 444 196 und 444 197 beschrieben sind.

Die folgenden Beispiele sollen die Erfindung näher erläutern, ohne sie jedoch darauf zu beschränken. Teile und Prozentangaben beziehen sich auf das Gewicht.

Beispiel 1

Eine Mischung aus 31,3 Teilen 2'-Carboxy-4-diethylamino-2-hydroxy-benzophenon, 32,4 Teilen N-p-Anisidinyl-N'-ethyl-N'-phenylethylendiamin-1,2, 120 Teilen Schwefelsäuremonohydrat und 30 Teilen Oleum (20%ig) wird 5 Stunden bei 70°C und 2 Stunden bei 100°C gerührt und anschließend auf 1500 Teile Eiswasser gegeben. Nach Neutralisieren mit wäßriger Natronlauge wird abfiltriert, mit Eiswasser gewaschen und in Toluol/Petrolether-Mischung umkristallisiert. Man erhält die Verbindung der Formel

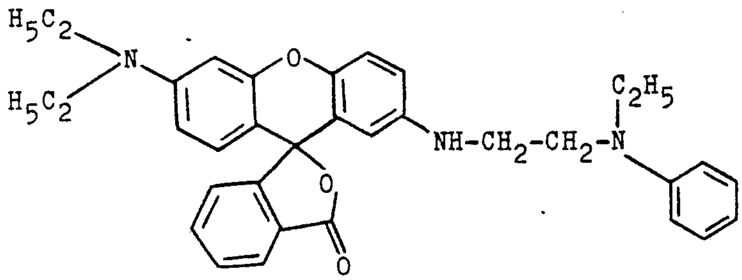

in Form farbloser Kristalle, die, in Toluol farblos gelöst, auf Siliziumdioxid eine schwarze, auf Bentonit eine grünstichig schwarze und auf Phenolharz eine grünschwarze Farbe ergeben.

Beispiel 2

38,6 Teile 2-Amino-6-diethylaminofluoran und 17,2 Teile 1-Diethylamino-2-chlorethan-Hydrochlorid werden in 50 Teilen N,N-Dimethylformamid 5 Stunden auf 150C gehalten. Nach Eingießen auf Wasser und Toluolextraktion fällt nach Entfernen des Lösungsmittels und Kristallisation aus Toluol/Petrolether die Verbindungen der Formel

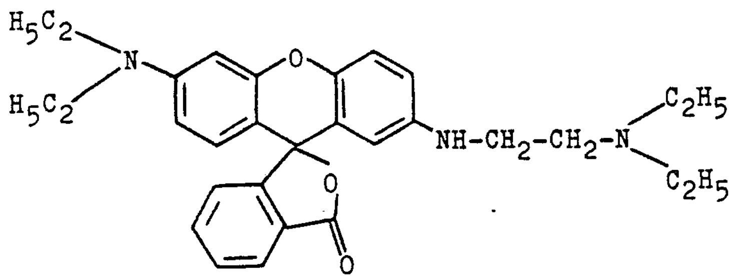

in Form farbloser Kristalle an, die, in Toluol farblos gelöst, auf Siliziumdioxid eine schwarze, auf Bentonit eine grünstichig schwarze und auf Phenolharz eine grüne Farbe ergibt.

Die in der nachstehenden Tabelle aufgeführten neuen Fluoranverbindungen der allgemeinen Formel (1) können nach den weiter oben beschriebenen Verfahren analog den Beispielen 1 und/oder 2 hergestellt werden.

TABELLE

| Bsp. | $R_1=R_2$ | $R_3$ | $R_4$ | $R_5$ | $Y_1$ | $Y_2$ | B | C | Farbton |
|---|---|---|---|---|---|---|---|---|---|
| 3 | $CH_3$ | $COCH_3$ | $C_2H_5$ | 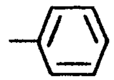 | H | H | $—CH_2—CH_2—$ | 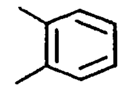 | dunkelrot |
| 4 | $CH_2—$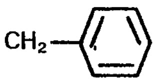 | H | $CH_3$ | $CH_3$ | H | $CH_3$ | $—CH_2—CH_2—$ | " | schwarz |
| 5 | $C_2H_5$ | $CH_2—$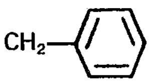 | $C_2H_5$ | 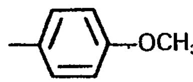$—OCH_3$ | H | H | $—CH(CH_3)—CH_2—$ | " | dunkelgrün |
| 6 | $C_2H_5$ | H | $C_2H_5$ | $H_3C$ 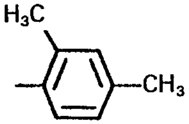 $—CH_3$ | H | H | $—CH_2CH_2CH_2CH_2—$ | " | schwarz |
| 7 | $C_2H_5$ | H | | 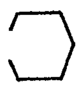 | H | H | $—CH_2—CH_2—$ | 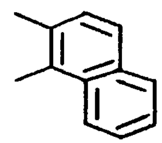 | schwarz |
| 8 | $C_2H_5$ | H | | 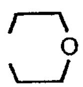 | H | $C_2H_5$ | $—CH_2—CH_2—CH_2$ | 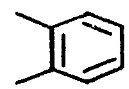 | schwarz |
| 9 | $C_2H_5$ | $C_2H_5$ | | 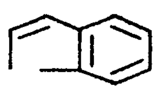 | H | H | $—CH_2—CH_2—$ | " | schwarz |

TABELLE (Fortsetzung)

| Bsp. | $R_1=R_2$ | $R_3$ | $R_4$ | $R_5$ | $Y_1$ | $Y_2$ | B | C | Farbton |
|---|---|---|---|---|---|---|---|---|---|
| 10 | $CH_3$ | $CH_2$ 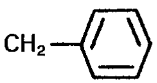 | $-CH_2CH_2-CN$ | 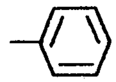 | 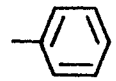 | H | $-CH_2-CH_2-$ | 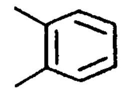 | grün |
| 11 | $C_2H_5$ | $CH_3$ | $-CH_2CH_2-OH$ | 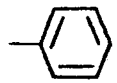 | $O-C_2H_5$ | H | $-CH_2-CH_2-$ | 〃 | grün |
| 12 | $C_2H_5$ | H | $C_2H_5$ | 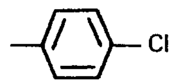 | H | H | $-CH_2-CH_2-$ | 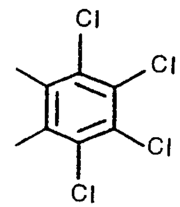 | schwarz |
| 13 | $C_2H_5$ | $COCH_3$ | $C_2H_5$ | 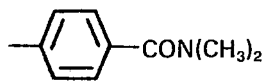 | Cl | H | $-CH_2-CH_2$ | 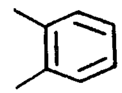 | dunkelrot |
| 14 | $C_2H_5$ | H | $C_2H_5$ | $C_2H_5$ | H | $OCH_3$ | $-CH_2-CH_2-$ | 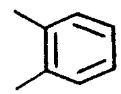 | violett-schwarz |
| 15 | $C_2H_5$ | H | $C_2H_5$ | 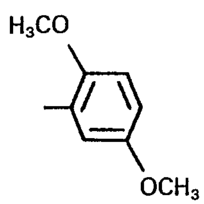 | H | $OCH_3$ | $-CH_2-CH_2-$ | 〃 | 〃 |

TABELLE (Fortsetzung)

| Bsp. | $R_1=R_2$ | $R_3$ | $R_4$ | $R_5$ | $Y_1$ | $Y_2$ | B | C | Farbton |
|---|---|---|---|---|---|---|---|---|---|
| 16 | $C_2H_5$ | H | $CH_3$ | 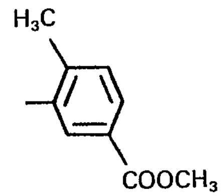 | H | $CH_3$ | 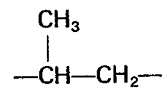 | 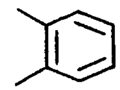 | schwarz |
| 17 | $CH_3$ | $CH_3$ | $C_2H_5$ | 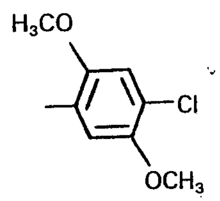 | H | H | 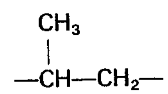 | " | dunkelgrün |

**Patentansprüche**

1. Fluoranverbindungen der allgemeinen Formel (1)

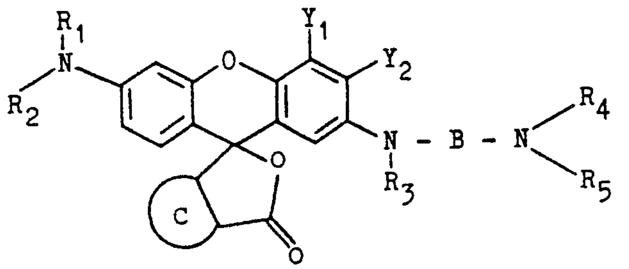

(1)

in welcher $R_1$ und $R_2$ unabhängig voneinander jeweils eine geradkettige oder verzweigte Alkyl-$C_1$—$C_4$-gruppe oder die Benzylgruppe bedeuten, $R_3$ ein Wasserstoffatom oder eine Alkyl-$C_1$—$C_4$-, Benzyl-, Acetyl-, Propionyl- oder Benzoyl-gruppe darstellt, $R_4$ und $R_5$ unabhängig voneinander jeweils eine geradkettige oder verzweigte Alkyl-$C_1$—$C_4$-gruppe, die durch Fluor-, Chlor- oder Bromatome oder durch Hydroxy-, Alkoxy-$C_1$—$C_4$- oder Cyanogruppen substituiert sein können, ferner eine Phenyl- oder Benzylgruppe, die durch Fluor-, Chlor- oder Bromatome oder durch Alkyl-$C_1$—$C_4$-, Alkoxy-$C_1$—$C_4$-, Carb(alkoxy-$C_1$—$C_4$)-, ggfs. durch Alkyl-$C_1$—$C_4$-gruppen substituierte Carbonamidgruppen oder Cyanogruppen substituiert sein können, bedeuten, und $R_4$ und $R_5$ zusammen mit dem Stickstoffatom einen ggfs. durch Alkyl-$C_1$—$C_4$-gruppen substituierten Piperidin, Morpholin- oder Indolrest darstellen können, $Y_1$ und $Y_2$ unabhängig voneinander jeweils ein Wasserstoff-, Chlor- oder Bromatom, eine Alkyl-$C_1$—$C_4$-, Alkoxy-$C_1$—$C_4$- oder Phenylgruppe, B eine ggfs. durch Hydroxy-, Alkyl-$C_1$—$C_4$- oder Alkoxy-$C_1$—$C_4$- gruppen substituierte Alkylen-$C_2$—$C_6$-gruppe darstellt, und C einen ggfs. durch Chlor- oder Bromatome substituierten 1,2-Phenylen- oder 1,2-Naphthylenrest bedeutet.

2. Fluoranverbindung der Formel

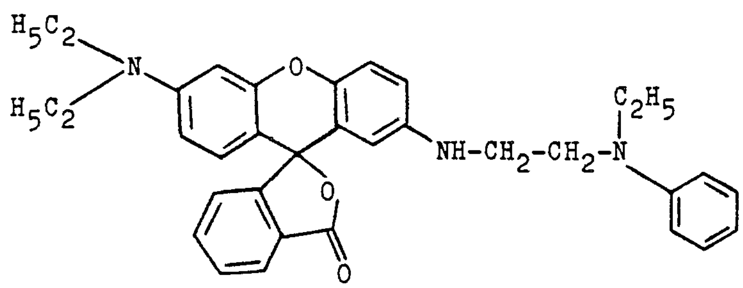

3. Fluoranverbindung der Formel

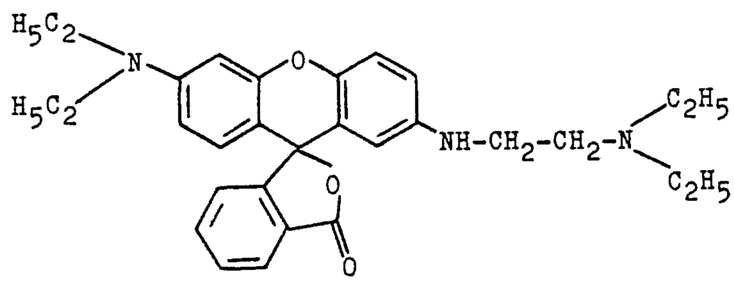

4. Verfahren zur Herstellung von Fluoranverbindungen der in Anspruch 1 genannten allgemeinen Formel (1), dadurch gekennzeichnet, daß man eine Carbonsäure der allgemeinen Formel (3)

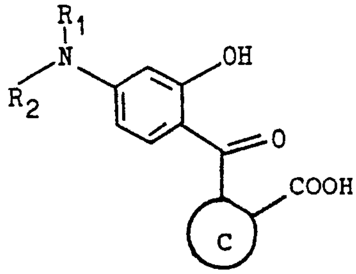

(3)

in welcher $R_1$, $R_2$ und C die in Anspruch 1 genannten Bedeutungen haben, mit einer p-Aminophenolverbindung der allgemeinen Formel (4)

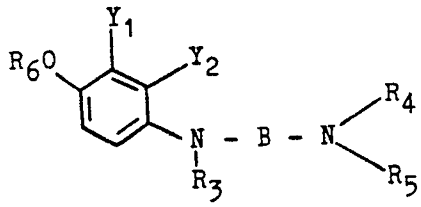

(4)

in welcher $R_6$ ein Wasserstoffatom, eine Alkyl-$C_1$—$C_4$-;, Acetyl, Propionyl- oder Benzoylgruppe, und $R_3$, $R_4$, $R_5$, B, $Y_1$ und $Y_2$ die in Anspruch 1 genannten Bedeutungen haben, in Gegenwart eines dehydratisierenden Kondensationsmittels bei Temperaturen von etwa 10 bis etwa 200°C umsetzt.

5. Verfahren zur Herstellung von Fluoranverbindungen der in Anspruch 1 genannten allgemeinen Formel (1), dadurch gekennzeichnet, daß man eine Fluoranverbindung der allgemeinen Formel (5)

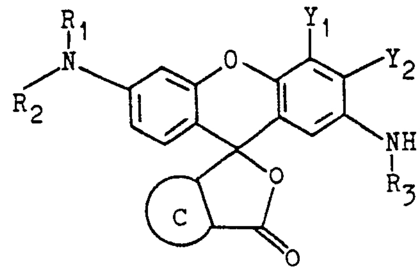

(5)

in welcher $R_1$, $R_2$, $R_3$, $Y_1$, $Y_2$ und C die in Anspruch 1 genannten Bedeutungen haben, mit einer Verbindung der allgemeinen Formel (6)

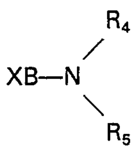

(6)

in welcher X ein Chlor-, Brom- oder Jodatom oder eine Hydroxy-, Acetyl- oder Sulfonyl-Gruppe bedeutet, und $R_4$ und $R_5$ die in Anspruch 1 genannten Bedeutungen haben, in einem inerten organischen Lösungsmittel bei Temperaturen von etwa 20° bis etwa 200°C umsetzt.

6. Verwendung einer Fluoranverbindung der in Anspruch 1 genannten allgemeinen Formel (1) als Farbbildner in einem druckempfindlichen oder wärmeempfindlichen Aufzeichnungsmaterial.

**Revendications**

1. Composés de fluorane de formule générale ci-dessous:

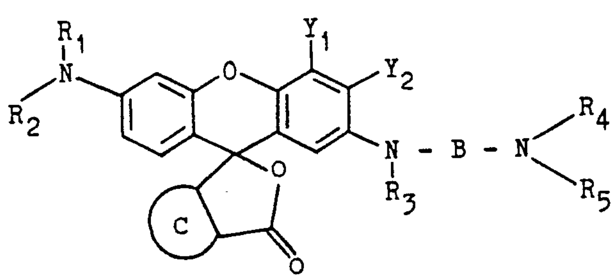

(1)

dans laquelle $R_1$ et $R_2$ désignent chacun, indépendamment l'un de l'autre, un alkyle en $C_1$—$C_4$ à chaîne droite ou ramifiée ou le groupe benzyle, $R_3$ désigne un atome d'hydrogène, un alkyle en $C_1$—$C_4$ ou un groupe benzyle, acétyle, propionyle ou benzoyle, $R_4$ et $R_5$ désignent chacun, indépendamment l'un de l'autre, un alkyle en $C_1$—$C_4$ à chaîne droite ou ramifiée qui peuvent avoir comme substituants des atomes de fluor, de chlore ou de brome ou des groupes hydroxy, alcoxy en $C_1$—$C_4$ ou cyano, ou encore un groupe phenyle ou benzyle pouvant avoir comme substituants des atomes de fluor, de chlore ou de brome ou des

groupes alkyles ou alcoxy en $C_1$—$C_4$ ou alcoxycarbonyles en $C_1$—$C_4$ dans le groupe alcoxy, des groupes carboxamides éventuellement substitués par de alkyles en $C_1$—$C_4$ ou des groupes cyano, ou bien $R_4$ et $R_5$ forment ensemble et avec l'atome d'azote un radical de pipéridine, de morpholine ou d'indole éventuellement substitués par des alkyles en $C_1$—$C_4$, $Y_1$ et $Y_2$ désignent chacun, indépendamment l'un de l'autre, un atome d'hydrogène, de chlore ou de brome, un alkyle ou un alcoxy en $C_1$—$C_4$ ou le groupe phényle, B est un alkylène en $C_2$—$C_6$ pouvant avoir comme substituants des groupes hydroxy, alkyles ou alcoxy en $C_1$—$C_4$, et C est un radical 1,2-phénylène ou 1,2-naphtylène portant éventuellement des atomes de chlore ou de brome.

2. Composé de formule:

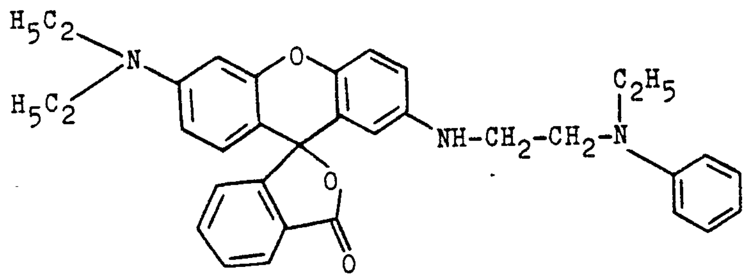

3. Composé de formule:

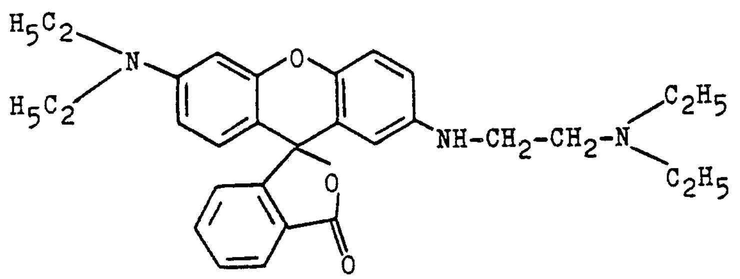

4. Procédé de préparation des composés de formule générale 1 selon la revendication 1, procédé caractérisé en ce que l'on fait réagir un acide carboxylique de formule générale 3:

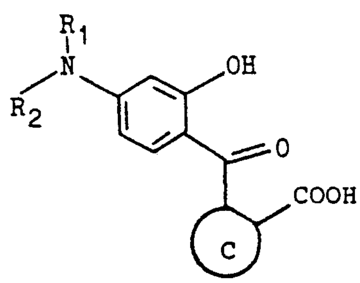

(3)

dans laquelle $R_1$, $R_2$ et C ont les désignations indiquées comme dans la revendication 1 avec un composé p-aminophénolique de formule générale 4:

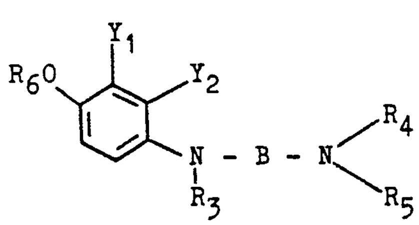

(4)

$R_6$ désignant un atome d'hydrogène, un alkyle en $C_1$—$C_4$ ou un groupe acétyle, propionyle ou benzoyle, en présence d'un agent de condensation déshydratant, à des températures d'environ 10 à environt 200°C.

5. Procédé de préparation des composés de formule 1 selon la revendication 1, caractérisé en ce que l'on fait réagir un composé de formule générale 5:

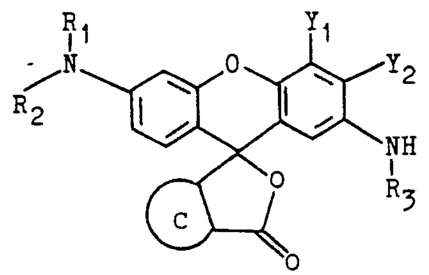

(5)

avec un composé de formule générale 6:

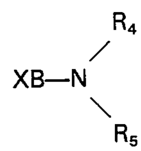

(6)

dans laquelle $R_1$, $R_2$, $R_3$, $Y_1$, $Y_2$ et C ont les désignations indiquées comme dans la revendication 1, X désignant un atome de chlore, de brome ou d'iode ou un groupe hydroxyle, acétyle ou sulfonyle, dans un solvant organique inerte, à des températures d'environ 20 à environt 200°C.

6. L'utilisation d'un composé de formule 1 selon la revendication 1 comme formateur de couleur (chromogène) dans une matière d'enregistrement sensible à la pression ou à la chaleur.

## Claims

1. Fluoran compounds of the general formula (1)

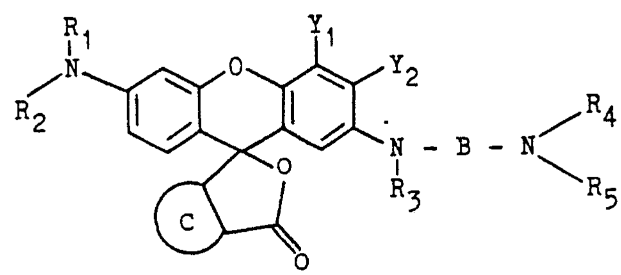

(1)

in which $R_1$ and $R_2$ independently of the other each denote a straight-chain or branched alkyl-$C_1$—$C_4$ group or the benzyl group, $R_3$ denotes a hydrogen atom or an alkyl-$C_1$—$C_4$, benzyl, acetyl, propionyl or benzoyl group, $R_4$ and $R_5$ independently of the other denote a straight-chain or branched alkyl-$C_1$—$C_4$ group which can be substituted by fluorine, chlorine or bromine atoms or by hydroxyl, alkoxy-$C_1$—$C_4$ or cyano groups, further a phenyl or benzyl group which can be substituted by fluorine, chlorine or bromine atoms or by alkyl-$C_1$—$C_4$, alkoxy-$C_1$—$C_4$, carb-(alkoxy-$C_1$—$C_4$), optionally alkyl-$C_1$—$C_4$-substituted carboxamido groups or cyano groups, and $R_4$ and $R_5$ together with the nitrogen atom can represent an optionally alkyl-$C_1$—$C_4$-substituted piperidine, morpholine or indole radical, $Y_1$ and $Y_2$ independently of the other each represent a hydrogen, chlorine or bromine atom, an alkyl-$C_1$—$C_4$, alkoxy-$C_1$—$C_4$ or phenyl group, B represents an optionally hydroxyl-, alkyl-$C_1$—$C_4$- or alkoxy-$C_1$—$C_4$-substituted alkylene-$C_2$—$C_6$ group, and C denotes an optionally chlorine- or bromine-substituted 1,2-phenylene or 1,2-naphthylene radical.

2. The fluoran compound of the formula

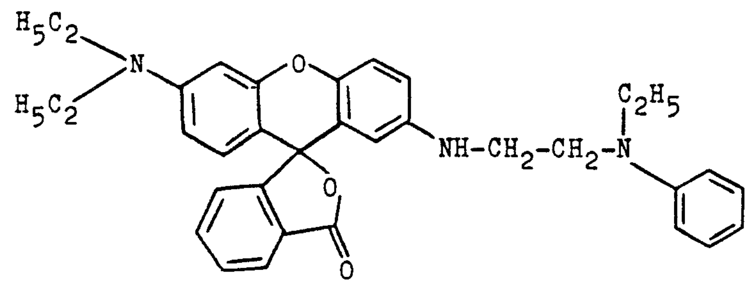

3. A fluorane compound of the formula

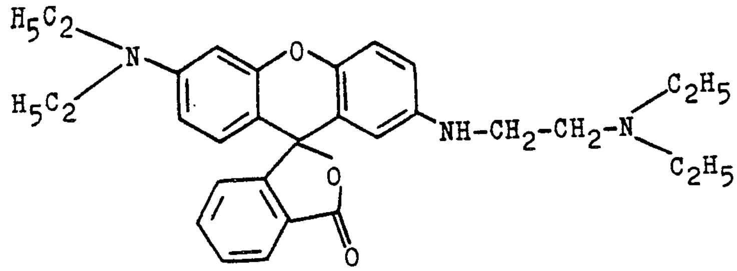

4. A process for preparing fluoran compounds of the general formula (1) mentioned in claim 1, which comprises reacting a carboxylic acid of the general formula (3)

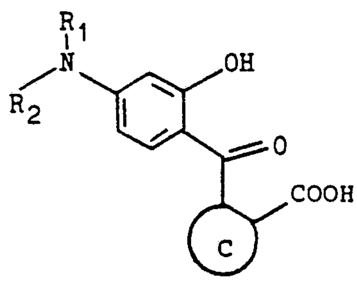

(3)

in which $R_1$, $R_2$ and C have the meanings mentioned in claim 1, with a p-aminophenol compound of the general formula (4)

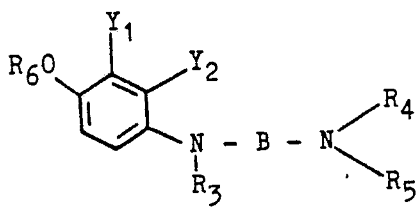

(4)

in which $R_6$ denotes a hydrogen atom or an alkyl-$C_1$—$C_4$, acetyl, propionyl or benzoyl group, and $R_3$, $R_4$, $R_5$, B, $Y_1$ and $Y_2$ have the meanings mentioned in claim 1, in the presence of a dehydrating condensing agent at temperatures of about 10 to about 200°C.

5. A process for preparing fluoran compounds of the general formula (1) mentioned in claim 1, which comprises reacting a fluoran compound of the general formula (5)

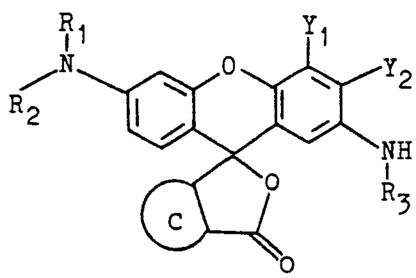

(5)

in which $R_1$, $R_2$, $R_3$, $Y_1$, $Y_2$ and C have the meanings mentioned in claim 1, with a compound of the general formula (6)

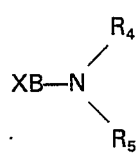

(6)

in which X denotes a chlorine, bromine or iodine atom or a hydroxyl, acetyl or sulfonyl group, and $R_4$ and $R_5$ have the meanings mentioned in claim 1, in an inert organic solvent at temperatures of about 20° to about 200°C.

6. The use of a fluoran compound of the general formula (1) mentioned in claim 1, as a color former in a pressure-sensitive or heat-sensitive recording material.